# FASCICULE DE BREVET EUROPEEN

(11) **EP 0 545 779 B1**
(45) Date de publication et mention de la délivrance du brevet: **05.02.1997**
(21) Numéro de dépôt: 92403174.3
(22) Date de dépôt: 25.11.1992
(51) Int. Cl.: E01B 25/00, E01B 23/04, G21C 17/013

(54) **Véhicule de pose automatique d'une voie par un véhicule se deplaçant sur cette voie, et voie conçue pour être installée par un tel véhicule**
Fahrzeug zum automatischen Verlegen von Schienen auf welchen sich das Fahrzeug fortbewegt; und Schiene für diesen Zweck
Vehicle for automatic monitoring of rails on which the vehicle moves, and the rail which the vehicle installs

(30) Priorité: 29.11.1991 FR 9114829
(43) Date de publication de la demande: 09.06.1993
(73) Titulaire: COMMISSARIAT A L'ENERGIE ATOMIQUE, 75015 Paris (FR)
(72) Inventeur: Villedieu, Eric, F-91240 Saint Michel Sur Orge (FR); Francois, Daniel, F-41100 Vendome (FR)
(74) Mandataire: Dubois-Chabert, Guy

(56) Documents cités:
- DE-A- 3 340 737
- FR-A- 2 588 382
- PATENT ABSTRACTS OF JAPAN no. 14276 (M-0984)14 Juin 1990

## Description

L'invention se rapporte tout d'abord à un véhicule de pose automatique d'une voie sur laquelle il se déplace, et aussi à une voie conçue pour être installée par un tel véhicule.

Elle peut trouver son application quand il convient d'effectuer des travaux à L'intérieur d'une enceinte contaminée ou inaccessible pour une autre raison. Les travaux doivent être effectués par des robots, ce qui ne pose pas de problème en soi à condition qu'ils puissent approcher de Leur endroit d'intervention, ce qui est souvent impossible avec des véhicules classiques portant les robots car les endroits peuvent être à des hauteurs très différentes ou environnés d'obstacles qui les rendent inaccessibles.

L'invention permet de lever ce genre de difficultés dans de nombreux cas. Son objet est l'établissement d'une voie dans l'espace et qui peut être recourbée ou en lignes brisées pour atteindre théoriquement n'importe quel point à l'intérieur de l'enceinte. La voie est en porte-à-faux à partir d'une extrémité encastrée située hors de la zone dangereuse et qui sert de base de départ pour le robot porteur des outils.

Il est cependant nécessaire de devoir poser ou construire la voie sans intervention humaine. C'est pourquoi on a conçu un véhicule circulant sur cette voie et apte à poser sans cesse de nouveaux éléments de voie les uns à la suite des autres une fois qu'il est arrivé au bout de la voie effectivement posée. L'art antérieur abonde en véhicules ferroviaires de remplacement des rails d'une voie sur laquelle ils roulent (tels que celui de DE-A-33 40 737) mais ils ne sont conçus que pour le domaine ferroviaire ordinaire et ne semblent pas susceptibles d'autres applications. Dans l'invention, les éléments de voie sont équipés de glissières et d'une crémaillère longitudinales, et le véhicule comprend sous sa forme la plus générale un châssis, mobile sur la voie, pourvu de galets de roulement et de maintien du châssis sur les glissières, d'un pignon de déplacement du châssis sur la voie en association à la piste d'avancement, et un chariot mobile perpendiculairement à la voie dans le châssis et pourvu de moyens pour tenir un élément de voie et le poser devant des éléments déjà aboutés de la voie, ces moyens comprenant des galets de roulement et de maintien des glissières de l'élément tenu et un pignon d'avancement de l'élément tenu sur le chariot en association à la crémaillère de l'élément tenu.

Avec une telle conception, le véhicule ne peut pas tomber de la voie quelle que soit l'inclinaison de celle-ci. Les éléments de voie précédemment tenus par le chariot peuvent être relâchés en avançant le véhicule après que ces éléments ont été posés pour libérer les galets du chariot.

Un capteur de détection de bout de voie peut être avantageusement prévu sur le véhicule, de même qu'un capteur de position de l'élément tenu par le chariot pour vérifier qu'il est bien à la position longitudinale souhaitée au moment où il va être posé.

Comme il est préférable de se prémunir contre les défaillances des capteurs de détection de bout de voie, on peut ajouter un moyen d'arrêt en bout de voie qui peut prendre la forme d'un levier articulé au châssis, à extrémité libre mobile sur la voie et ergot venant buter contre une saillie en bout de voie quand l'extrémité libre dépasse de la voie.

Le véhicule peut en outre être pourvu de moyens pour modifier l'état de parties mobiles de la voie ou pour verrouiller les éléments entre eux. Il peut s'agir d'une clé tournant autour d'un axe perpendiculaire à la voie et qui est munie d'une extrémité à entaille plate ou au contraire à saillie plate.

La voie comprend un corps porteur de glissières et une crémaillère longitudinales et venant en prolongement sur les éléments aboutés sur les éléments aboutés et une crémaillère parallèle aux glissières et sur laquelle s'engage un pignon appartenant aux moyens de déplacement du véhicule sur la voie. Les éléments peuvent être terminés par des raccords à emboîtement coulissant et à butée verticale telles que des queues d'aronde effilées. Parmi d'autres caractéristiques optionnelles auxquelles on peut recourir séparément ou en combinaison, on peut ajouter aux éléments un ou plusieurs repères d'arrêt au bout des éléments pour les capteurs optiques ou autres de bout de voie, ou une entaille longitudinale terminée par un muret de butée pour retenir le moyen d'arrêt en bout de voie; les éléments de changement de direction peuvent être munis d'une partie tournante autour d'un axe perpendiculaire à la voie pour les éléments coudés ou prendre la forme d'éléments d'inclinaison de la voie qui sont conçus, dans la réalisation effectivement construite, sous forme d'éléments à partie tournante pivotant autour de l'axe de l'élément : l'inclinaison est assurée par un élément coudé adjacent et utilisé en combinaison. Une telle disposition évite d'interrompre la rigidité de la voie.

Les parties tournantes sont de préférence actionnées par un mécanisme irréversible, à jeu et à frottement pour des raisons qui apparaîtront plus loin en liaison avec l'emploi d'une clé à saillie ou à entaille plate.

On va maintenant passer à la description des figures suivantes pour un commentaire plus complet d'une réalisation de l'invention qui est donnée à titre illustratif et non limitatif:
- la figure 1 est une vue générale d'une voie, établie conformément à l'invention,
- la figure 2 représente le point de départ de la voie,
- la figure 3 représente certaines particularités de la voie,
- les figures 4, 5 et 6 illustrent la pose d'un élément, et certaines particularités du véhicule,
- les figures 7 et 8 représentent plus précisément le mode de verrouillage,
- la figure 9 représente un élément coudé,
- les figures 10 et 11 sont deux coupes de l'élément coudé suivant les lignes X-X et XI-XI de la figure 9,
- la figure 12 représente un élément d'inclinaison,
- la figure 13 illustre comment cet élément est utilisé,
- les figures 14 et 15 représentent deux coupes de l'élément d'inclinaison selon les lignes XIV-XIV et XV-XV des figures 13 et 12 respectivement ,
- la figure 16 représente en coupe transversale la nature et l'utilisation du mécanisme de verrouillage et d'actionnement des parties mobiles,
- la figure 17 représente en vue de dessus le mécanisme de verrouillage et d'actionnement sur le véhicule, ainsi que le moyen d'arrêt en bout de voie,
- les figures 18 à 20 représentent le moyen d'arrêt d'autres façons, et
- la figure 21 représente un autre genre de voie, à éléments ramifiés.

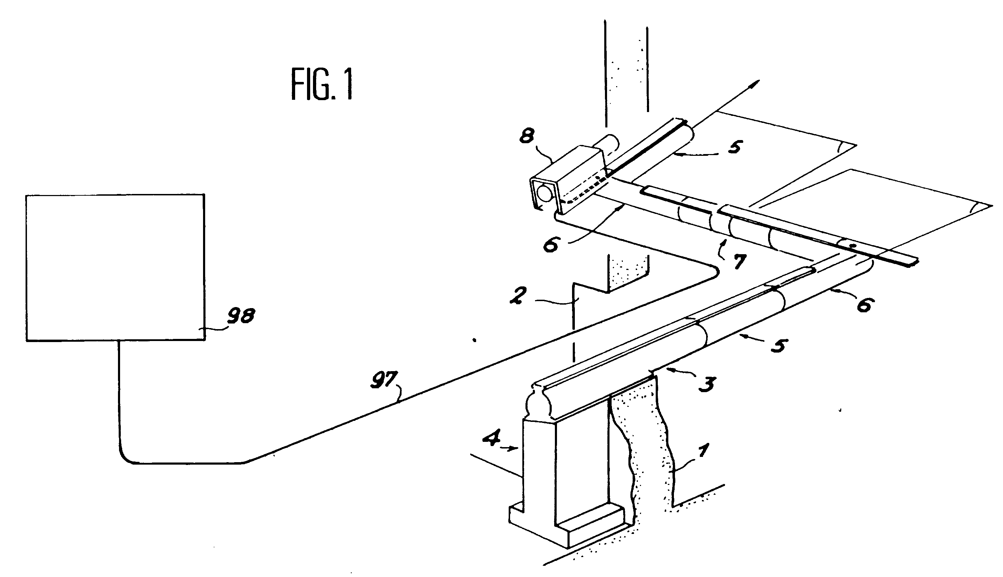

La voie représentée sur les figures 1, 2 et 3 s'étend à l'intérieur d'une enceinte 1 qui délimite une atmosphère hostile. L'enceinte 1 est percée d'une ouverture 2 à travers laquelle la voie s'étend pour constituer, hors de l'enceinte 1, une portion de départ 3 encastrée à un support 4 par un soudage ou un boulonnage. La portion de départ 3 est utilisée pour l'introduction des véhicules sur la voie, leur retrait et le chargement des divers matériels. Des ouverture ou des moyens de manipulation, tels que des sas et des boîtes à gant, se trouvent à côté de la portion de départ 3 et permettent d'accomplir manuellement ces opérations.

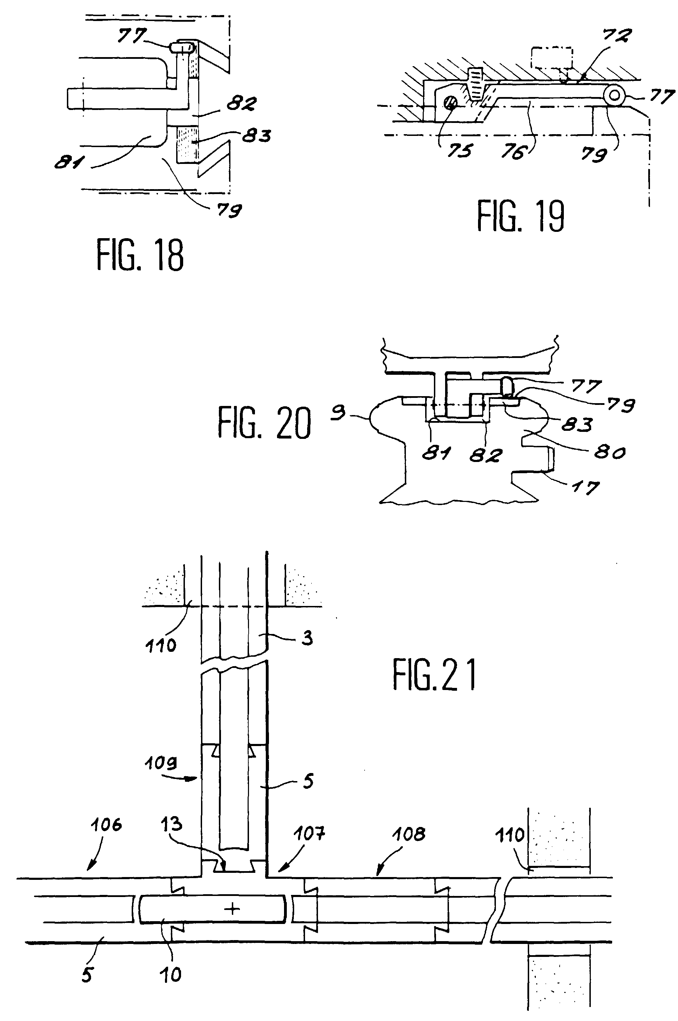

La voie s'étend cependant pour l'essentiel à l'intérieur de l'enceinte 1 et se compose d'éléments aboutés les uns à la suite des autres et parmi lesquels on peut reconnaître trois sortes : la plupart sont des éléments droits 5 dont la section est uniforme et la forme immuable, des éléments coudés 6 qui permettent de changer la direction de la voie et des éléments d'inclinaison 7 formés de deux parties pivotant l'une par rapport à l'autre autour de l'axe de l'élément. Un tel élément d'inclinaison 7 permet en combinaison avec un élément coudé 6 de modifier la pente de la voie au-delà de lui et donc sa hauteur. Ces éléments et les moyens concrets qui permettent de les commander seront bientôt décrits. La portion de départ 3 peut être considérée comme une quatrième sorte d'élément de voie destinée à l'encastrement. Une cinquième sorte, qui autorise les ramifications et constitue en fait un aiguillage, sera décrite à propos de la figure 21.

Un véhicule 8 circule sur la voie ou plus exactement sur une paire de glissières 9 ou de barres parallèles situées au sommet des éléments 5, 6 et 7 constituant la voie et qui viennent en prolongement sur toutes les portions rectilignes de la voie. Des discontinuités sont cependant inévitables avec la conception qui a été choisie, c'est-à-dire sans aucune courbe, pour les éléments coudés 6 et d'inclinaison 7. Les éléments coudés 6 comprennent un plateau 10 tournant autour d'un axe 11 et qui s'étend sur la plus grande partie de leur longueur pour comporter donc l'essentiel des glissières 9 de ces éléments coudés 6. La rotation des plateaux 10 quand le véhicule se trouve sur leurs glissières 9 modifie sa direction et l'aligne sur l'une ou l'autre des portions adjacentes de la voie.

Le véhicule 8 est manuellement enfilé autour des glissières 9 par l'extrémité de la portion de départ 3 de la voie. Il comporte tout d'abord un châssis inerte 99 qui porte un chariot 12 susceptible de tenir un élément de voie 5, 6 ou 7 et qui est mobile verticalement (ou, plus généralement, perpendiculairement à la voie) par rapport au châssis 99 de manière à abaisser l'élément de voie tenue et à remonter ensuite. il s'agit donc d'un ascenseur. On voit que si le véhicule 8 est au bout de la voie déjà installée, l'élément tenu pourra être mis en prolongement du précédent et assemblé à lui par un raccordement à queue d'aronde 13 à l'extrémité de tous les éléments 5, 6 et 7. La voie est ainsi construite élément par élément. Une fois que le chariot 12 est revenu à sa position initiale et que le véhicule 8 est sorti de l'enceinte 1, un nouvel élément peut être chargé sur le chariot 12 et le véhicule 8 va le poser de manière à prolonger encore la voie.

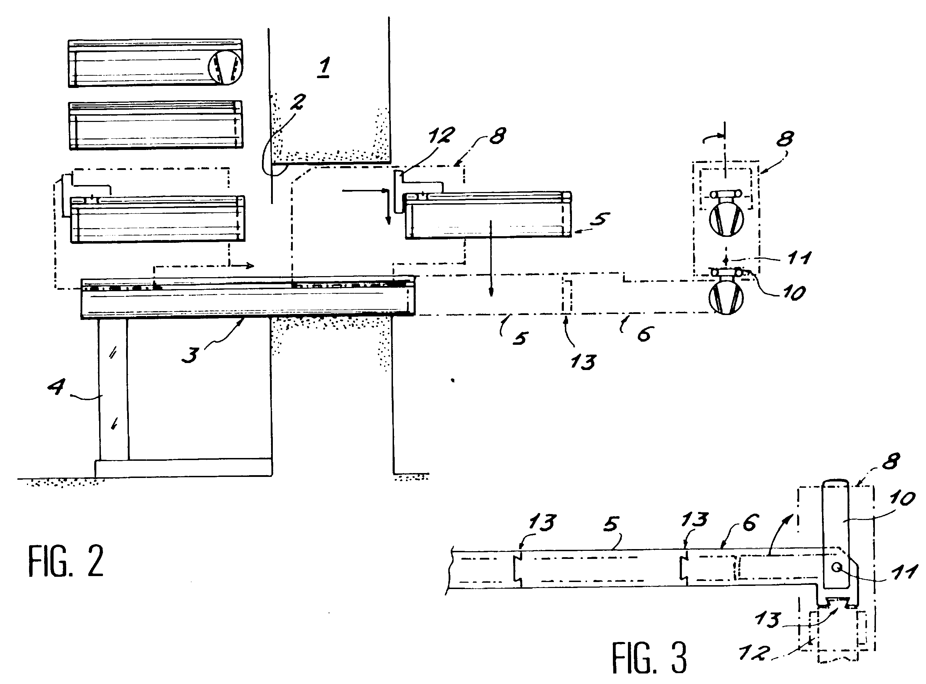

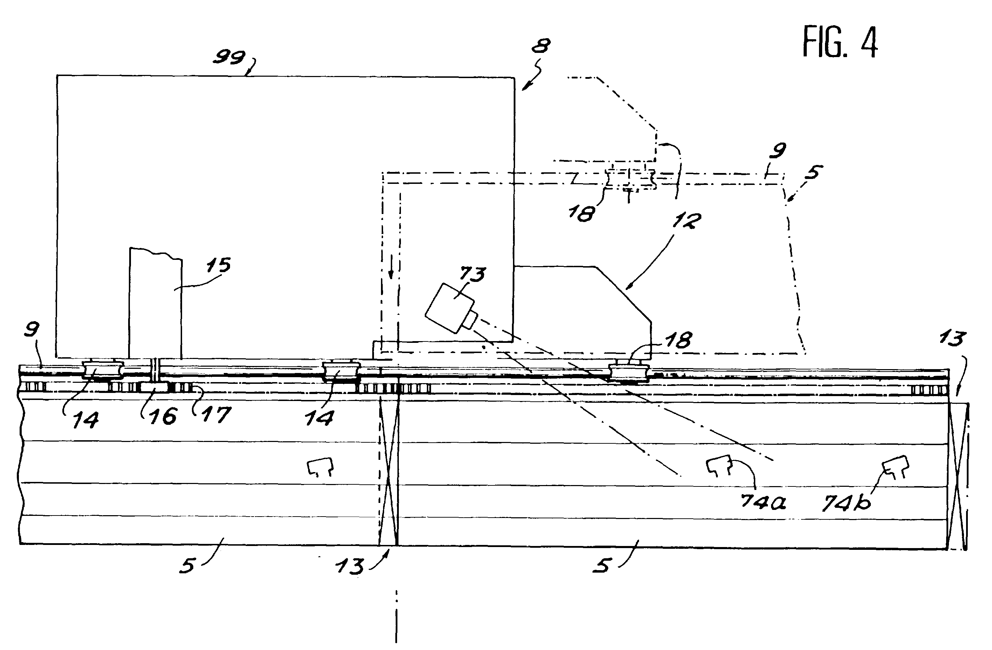

La figure 4 est une vue plus détaillée du véhicule 8 et de la voie selon la direction de la figure 2 et montre que le véhicule 8 coulisse sur la voie au moyen de deux paires de galets 14 à gorge centrale et qui sont situés de part et d'autre des glissières 9. Chaque paire de galets 14 enserre donc les glissières 9. Aucune inclinaison de la voie ne peut donc arracher le véhicule 8 de la voie. Un moteur 15 entraîne un pignon 16 qui engrène dans une crémaillère 17 appartenant aux éléments 5, 6 et 7 et parallèle aux glissières 9 pour faire avancer le véhicule 8 sur la voie. Le chariot 12 tient l'élément à poser en bout de voie à l'aide de deux autres paires de galets 18 semblables à ceux du véhicule 8 proprement dit, mais un seul galet 18 apparaît ici. Un des galets 14 ou 18 de chaque paire tourne autour d'un axe fixe et l'autre tourne autour d'un axe situé à l'extrémité d'un levier articulé à un point fixe et tournant dans le plan des glissières 9. Le levier est repoussé par un ressort vers les glissières 9, qui sont donc pincées entre chaque paire de galets 14 ou 18. De plus, l'écartement des galets 14 ou 18 de chaque paire est réglé automatiquement pour l'ajuster aux variations de forme et de position qui peuvent affecter les glissières 9.

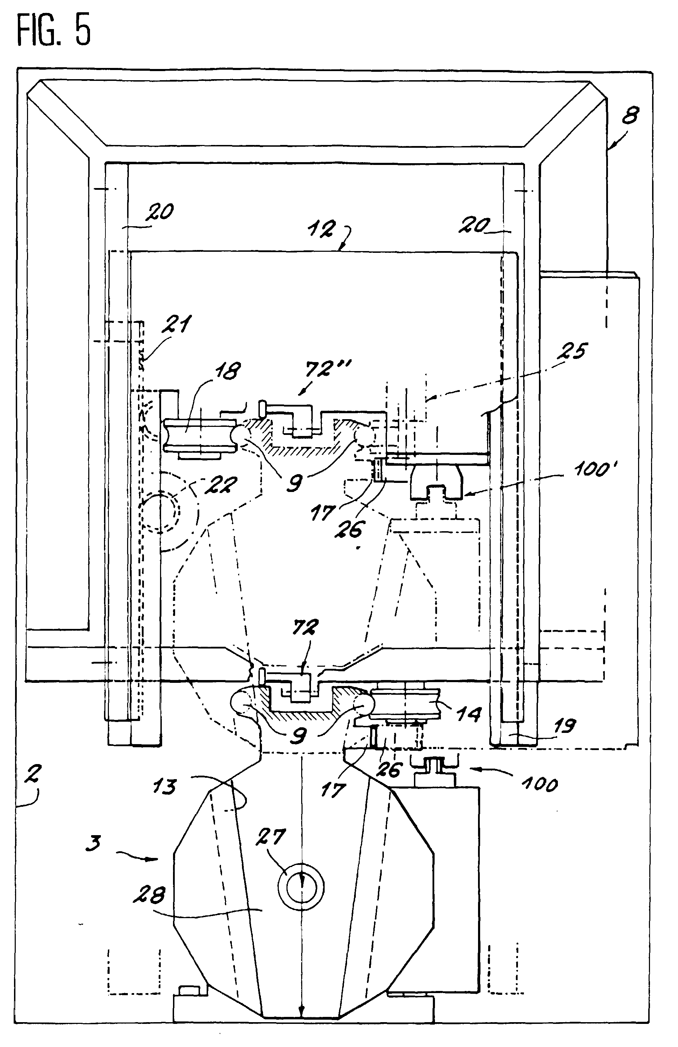

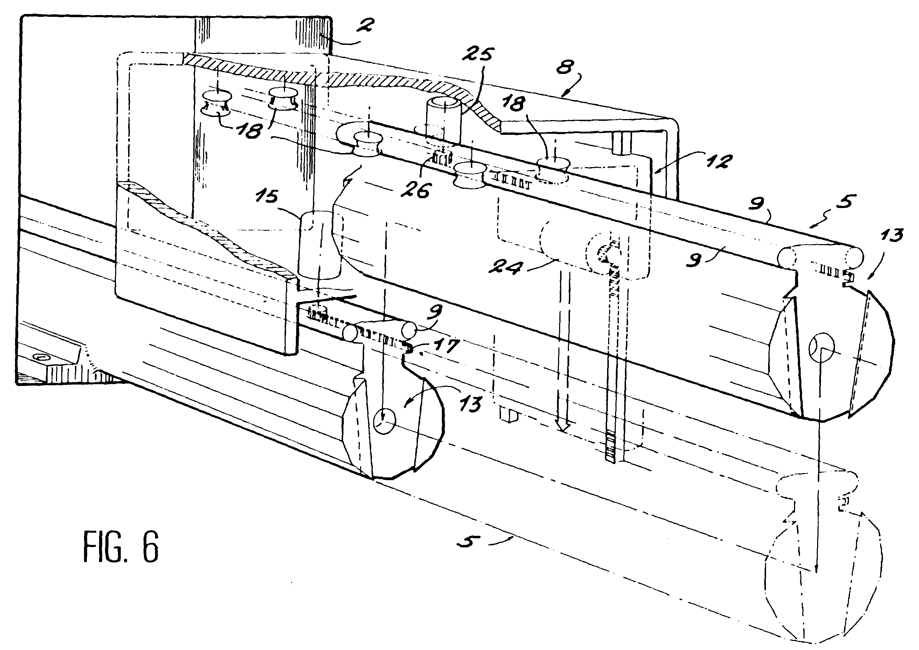

On se reporte maintenant aux figures 5 et 6. Le véhicule 8 est ouvert vers l'avant et l'arrière pour livrer passage à l'élément de voie tenu. Le chariot 12 comprend des profilés verticaux à section en U 19 qui coulissent dans des montants 20 faisant office de glissières verticales des deux côtés du véhicule 8. Une crémaillère 21 verticale est également située sur un des côtés du véhicule 8 et un pignon 22 actionné par un moteur 24 situé sur le chariot 12 permet d'abaisser ou d'élever à volonté celui-ci. Quand l'élément de voie précédemment tenu est posé, le chariot 12 est dégagé en l'avançant sur la voie jusqu'à ce que ses galets 18 sortent des glissières 9.

Enfin, un pignon 26 engrène avec la crémaillère 17 de l'élément tenu par le chariot 12 et permet d'avancer l'élément tenu pour le mettre devant le précédent quand le véhicule 8 reste stationnaire après avoir atteint le bout de voie. Un moteur 25 fait tourner le pignon 26.

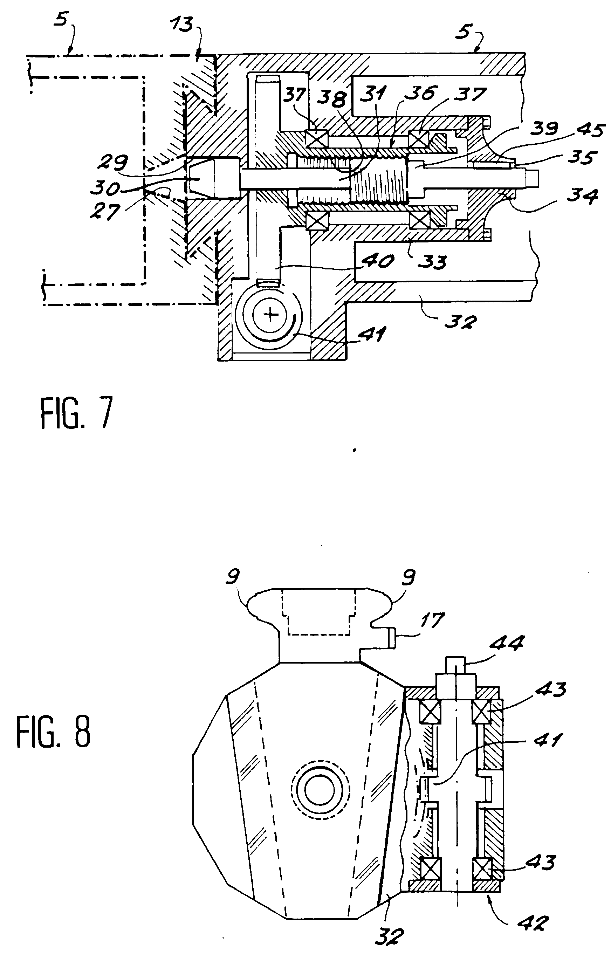

On voit bien que le raccord à queue d'aronde 13 s'effile vers le bas, ce qui empêche l'élément de tomber quand il est relâché. Un trou 27 est percé au centre de la face de fond 28 du côté rainuré à queue d'aronde 13. Le trou 27 est utilisé pour le verrouillage des éléments, qui est exposé aux figures 7 et 8. Le côté saillant du raccord porte quant à lui un autre trou 29 dans lequel est logé un dé 30 de verrouillage fixé à l'extrémité d'un doigt 31 coulissant axialement à l'intérieur de l'élément 5, 6 ou 7 de voie correspondant. Il convient à ce sujet de rappeler que les éléments 5, 6 et 7 se composent, outre des glissières 9 et de la crémaillère 17, d'un profilé situé en dessous d'elles et dont l'utilité est de conférer à la voie sa résistance mécanique et sa rigidité. Il s'agit donc d'un profilé avantageusement polygonal ou circulaire et creux, c'est-à-dire qu'il peut contenir un certain nombre de mécanismes dont l'un est en train d'être décrit. Des nervures de raidissage peuvent évidemment cloisonner l'intérieur du profilé.

La paroi cylindrique du profilé des éléments 5, 6 et 7 de voie est désignée par 32. Elle porte un tube interne 33 terminé dans sa partie éloignée du raccord à queue d'aronde 13 par un petit chapiteau 34 muni d'un perçage central 35 par lequel passe l'extrémité du doigt 31. Le tube interne 33 soutient une douille 36 par l'intermédiaire de deux roulements 37 montés de telle sorte que la translation de la douille 36 sur le tube interne 33 est impossible. La douille 36 porte un taraudage 38 dans lequel est engagé un renflement fileté 39 du doigt 31, ainsi qu'une roue 40 à denture hélicoïdale mue par un pignon 41 à denture hélicoïdale. Le pignon 41 est monté sur un axe vertical qui s'étend dans un compartiment 42 en saillie latérale attenant à la paroi 32. Deux roulements 43 autorisent l'axe du pignon 41 à tourner librement, et cet axe dépasse du compartiment 42 en saillie latérale par une extrémité à clé 44 qui s'étend un peu à côté de la crémaillère 17 et des glissières 9 et un peu en dessous d'elles.

La prise de la clé 44 par un mécanisme de commande disposé sur le véhicule 8 et dont on entreprendra ensuite la description est responsable de la rotation de l'axe du pignon 41, de la roue 40 et de la douille 38, ainsi que de la translation du doigt 31 par l'engagement du renflement fileté 39 dans le taraudage 38 : une clavette 45 engagée dans le perçage central 35 et dans le doigt 31 empêche en effet toute rotation de celui-ci. On provoque donc finalement l'enfoncement du dé 30 dans le trou 27, qui est par ailleurs conique comme l'extrémité du dé 30 pour obtenir un meilleur centrage, grâce auquel une excellente mise en prolongement des glissières 9 est obtenue.

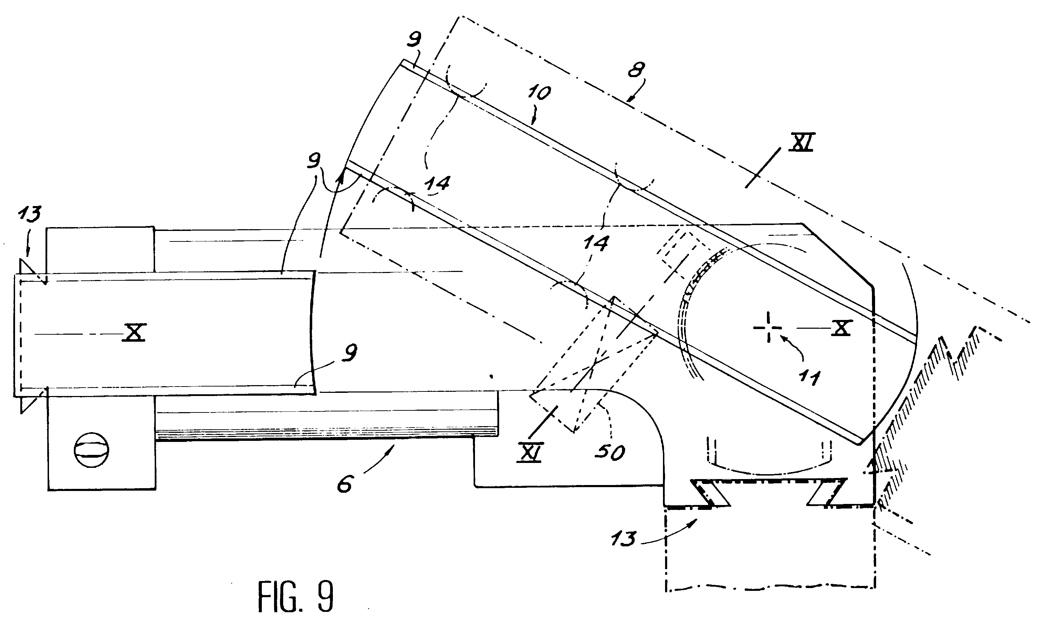

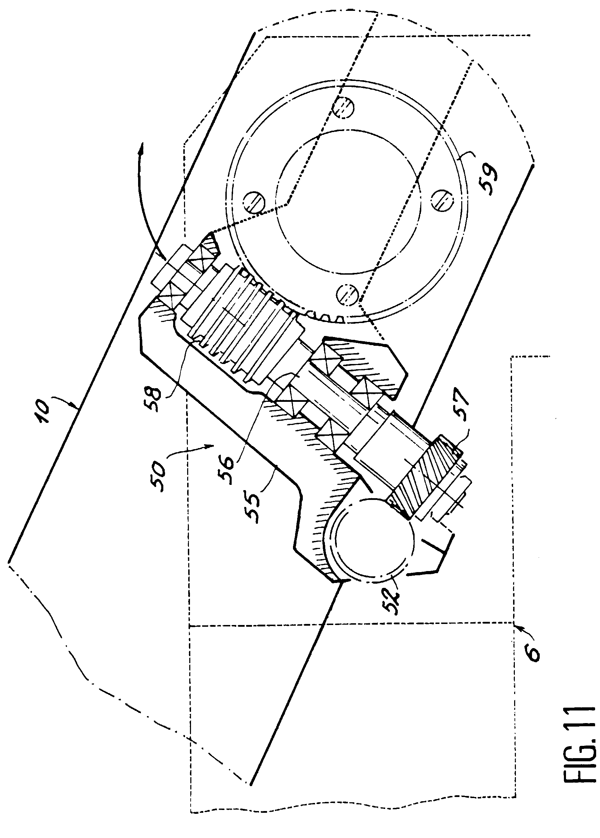

On va maintenant passer à la description des éléments coudés 6 que les figures 9 à 11 représentent plus précisément.

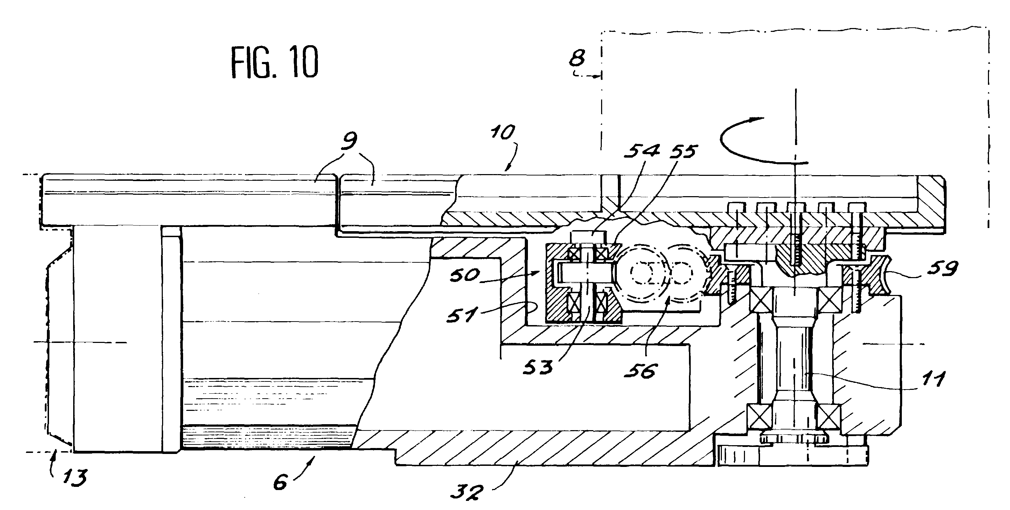

Ils sont en forme d'angle droit ou plus généralement quelconque : l'axe 11 de rotation du plateau 10 est situé au sommet et les extrémités des côtés sont constitués par les raccords à queues d'aronde 13. Le plateau 10 est sensiblement plus long que l'empattement des galets 14, de sorte que le véhicule 8 est engagé exclusivement sur le plateau 10 quand il est en position de le faire tourner en actionnant un mécanisme de commande 50 en saillie latérale sur le plateau 10 non loin de l'axe 11. Le mécanisme de commande 50 est par ailleurs (figure 10) partiellement logé sous le plateau 10 et dans un creux 51 ménagé à la faveur d'un décrochement de la paroi 32.

Le mécanisme de commande 50 comprend tout d'abord une vis sans fin 52 tournant librement autour d'un axe vertical 53 et terminée vers le haut par une clé à saillie plate 54. Deux roulements maintiennent rigidement l'axe 53 dans un petit boîtier 55 solidaire du plateau 10. Le petit boîtier 55 contient également un axe de transmission 56 de direction horizontale et oblique et qui tourne librement tout en étant maintenu par d'autres roulements dans une position fixe dans le petit boîtier 55. L'axe de transmission 56 est muni d'un pignon 57 mû par la vis sans fin 52 et d'une vis sans fin secondaire 58 à son autre extrémité qui engrène dans une couronne dentée 59 à denture concave pour assurer une surface d'engrènement aussi grande que possible ; la couronne dentée 59 est vissée à la paroi 32 et entoure l'axe 11. La rotation imposée à la vis sans fin secondaire 58 produit donc des forces sur le petit boîtier 55 et de là sur le plateau 10 qui est obligé de tourner. Le véhicule 8 commande en pratique des rotations au plateau 10 jusqu'à ce que les portions de glissières 9 qu'il porte viennent en prolongement de l'une ou l'autre des glissières fixes adjacentes.

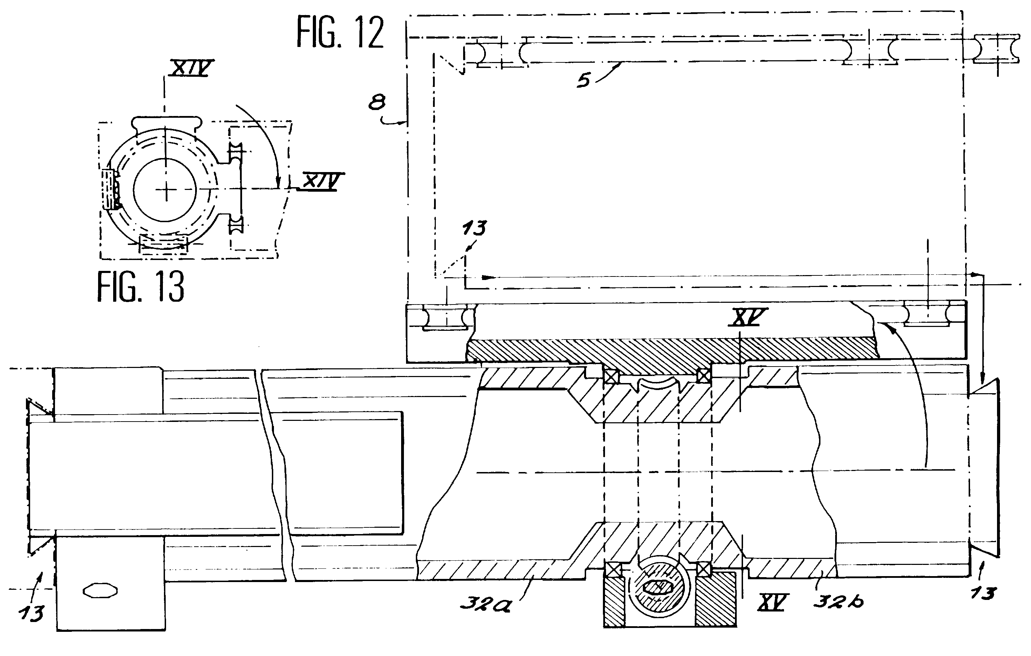

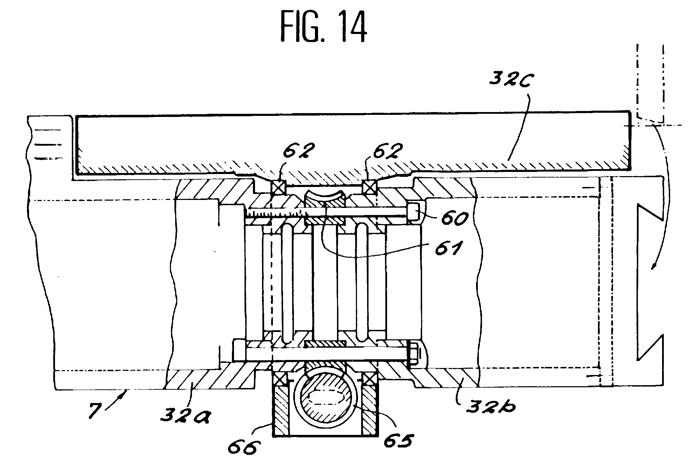

On va maintenant passer aux figures 12 à 15 pour une description plus complète des éléments d'inclinaison 7.

Leur paroi 32 est divisée en deux parties 32a et 32b reliées par des vis 60 qui compriment une couronne dentée 61 entre ces parties tout en les maintenant solidaires. La paroi 32 comprend en outre une couronne 32c qui entoure la partie 32b, qui est sensiblement plus courte que l'autre, et le bout de la partie 32a autour desquelles elle peut tourner par l'entremise d'une paire de roulements 62 de part et d'autre de la couronne dentée 61. Les roulements 62 sont situés à peu près au milieu de la couronne 32. La partie extérieure 32c porte donc le bout des glissières 9 selon l'exigence déjà exprimée à propos des éléments coudés 6, c'est-à-dire que la longueur doit être supérieure à l'empattement des galets 14 tout en permettant au véhicule 8 d'accéder à un mécanisme de commande 63 qui est, comme le mécanisme de commande précédemment rencontré, en saillie latérale à côté de la partie 32c. Ce mécanisme de commande 63 comprend également une clé 64 un peu à côté des glissières 9 et de la crémaillère 17 et en dessous d'elles, qui commande une vis sans fin 65 maintenue par des roulements à position axiale fixe dans le boîtier 66 du mécanisme de commande 63. La vis sans fin 65 engrène avec la couronne dentée 61 qui est maintenue fixe par les vis 60. Le boîtier 66 et la partie 32c de la paroi qui lui est solidaire sont donc entraînés en rotation autour des roulements 62.

Les queues d'aronde 13, situées aux faces d'extrémité des parties 32a et 32b, sont orientées dans des directions différentes qui définissent l'angle d'inclinaison caractéristique de chaque élément 7 et qui est un angle droit dans l'exemple représenté aux figures 12 et 13.

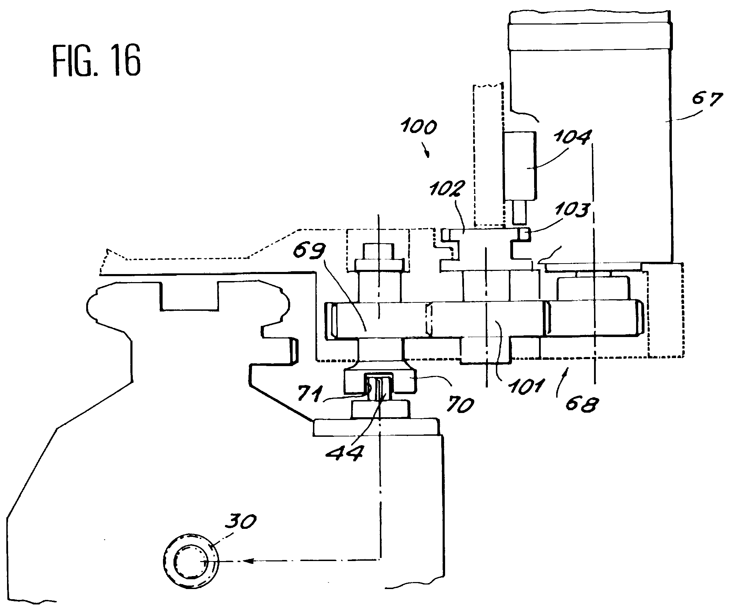

On constate que toutes ces clés de commande de verrouillage et de déplacement de parties mobiles sont du même genre à saillie plate. Elles sont d'ailleurs situées du même côté des éléments 5, 6 et 7, ce qui permet éventuellement de les commander par un mécanisme commun 100 représenté à la figure 16 et qui consiste en un moteur 67 entraînant une transmission à engrenages 68 terminée par un axe vertical 69 lui-même terminé par une clé 70 présentant une rainure ou une entaille 71 rectiligne. Les saillies rectilignes des axes de déplacement et de verrouillage pénètrent dans l'entaille 71, et il suffit alors d'arrêter le véhicule 8 pour que le moteur 67 puisse faire tourner les clés. Le principe d'un tel mécanisme impose cependant que les saillies et les entailles 71 soient toujours en prolongement pour que l'engrènement puisse avoir lieu et que la clé 70 ne heurte pas les saillies plates, c'est-à-dire dans le sens longitudinal local de la voie.

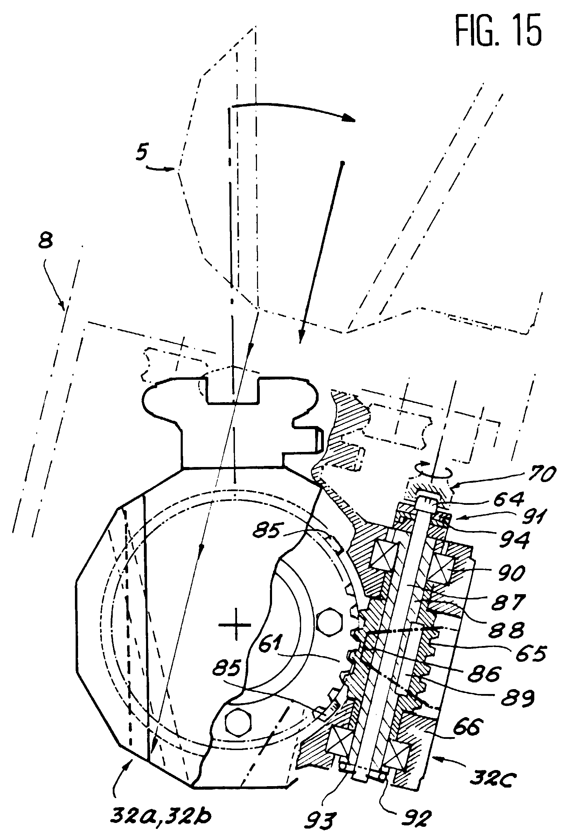

Le moteur 67 ne doit faire tourner l'axe 69 que d'un nombre entier de demi-tours. Cette exigence peut être facilement conciliée avec celle d'un placement précis des parties mobiles grâce en particulier aux jeux qui sont prévus dans les transmissions. Si on veut bien revenir à la figure 15, on constate tout d'abord que la partie 32b est munie de deux butées angulaires 85 qui limitent la course de la couronne 32c en arrêtant un bloc 86 qui lui est vissé.

La clé 64 est prolongée par un axe 87 auquel elle est rigidement liée ; un manchon 88 entoure l'axe 87, et il est relié à la vis sans fin 65 par une clavette 81. Deux roulements maintiennent le manchon 88 dans le boîtier 66. De plus, deux rondelles 91 sont serrées axialement entre la clé 64 et le manchon 88 grâce à un joint 92 comprimé entre l'autre extrémité du manchon 88 et un anneau élastique 93 inséré autour de l'axe 87 à l'opposé de la clé 64. On remarque encore que la clé 64, les rondelles 91 et la face extrême du manchon 88 sur laquelle elles sont appuyées présentent des changements d'épaisseur qui font que ces pièces s'imbriquent légèrement les unes dans les autres et se font face par trois paires de faces en gradin (longitudinales) 94.

Quand la butée mécanique est établie, il est possible de tourner la clé 70 jusqu'à placer la saillie rectiligne et l'entaille 71 à l'orientation longitudinale souhaitée qui est nécessaire pour dégager la clé 70 en avançant le véhicule 8. La rotation infligée à la clé 70 est une rotation inverse de celle qui permet la mise en butée et d'un angle au plus égal à un demi-tour. Elle provoque la séparation des paires de faces en gradin 94, qui sont prévues avec des jeux importants, si bien qu'aucun mouvement n'est plus transmis au manchon 88 ni donc à la couronne 32c, qui reste à la position voulue. Le serrage exercé par le joint 92 interdit ensuite par les frottements qu'il provoque toute rotation accidentelle de la clé 64 jusqu'à ce que le véhicule 8 revienne (il serait sinon prisonnier car dans l'incapacité de franchir l'élément d'inclinaison 7 en saisissant la clé 64). L'avantage de l'emploi d'une vis sans fin est qu'un tel mécanisme de transmission est irréversible et que la couronne 32c est donc maintenue en place.

Des mécanismes semblables mais non représentés de joints frottant, de rondelles à gradin offrant un assemblage à jeu angulaire pour la clé et de butées définissant des positions d'arrêt existent pour les systèmes de verrouillage des éléments 5, 6, 7 et de commande des plateaux 10 ; leur fonctionnement est le même.

La réalisation représentée comporte cependant un autre mécanisme de commande 100' semblable au précédent sans que cette duplication soit nécessaire ; il est situé sur le chariot 12 et représenté à la figure 5. Il est plus précisément chargé des verrouillages des éléments 5, 6 et 7, l'autre étant consacré à la commande des parties mobiles des éléments 6 et 7. Une conception plus simple est la contrepartie obtenue. Le second mécanisme de commande 100' est placé de façon qu'il saisisse la clé 44 de verrouillage de l'élément tenu au moment où celui-ci est abaissé avec le chariot 12.

Pour vérifier la bonne position angulaire de la clé 70, la transmission à engrenages 68 comprend un axe 101 dont dépasse un disque 102 muni d'encoches 103 régulièrement réparties à sa périphérie et dont le nombre est tel que chaque demi-tour de la clé 70 fait passer une des encoches 103 devant un capteur 104. De plus, l'orientation longitudinale de l'entaille 71 est établie quand une encoche 103 est devant le capteur 104.

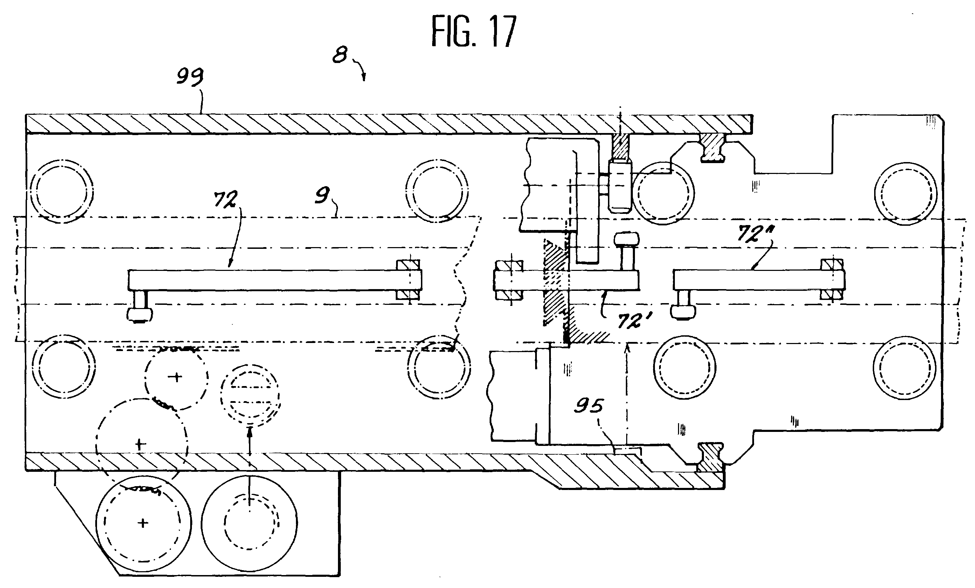

Le véhicule 8 est représenté à nouveau à la figure 17. On a cette fois figuré des leviers 72 destinés à empêcher le véhicule 8 de tomber si celui-ci dépassait de l'extrémité de la voie. Il existe certes des capteurs 73 (figure 4) aptes à discerner des repères 74 installés sur une génératrice des parois 32 des éléments 5, 6 et 7. Plus précisément, les repères 74 sont situés vers la fin de chaque élément et on peut distinguer un premier repère 74a qui indique au véhicule 8 qu'il faut ralentir et un second repère 74b qui indique l'arrêt. Les repères 74 sont identiques et constitués par un morceau de tôle qui dépasse latéralement de la paroi 32. Des repères d'autres genres tels que des points réfléchissants ou d'autres signes peuvent être admis en fonction de la nature du capteur 73, optique, inductif ou autre. Il est bien sûr nécessaire de pourvoir le système de commande du véhicule 8, qui est de nature essentiellement électronique, d'une mémoire qui lui permet de compter les éléments de voie déjà posés et donc de déduire le nombre de repères 74 qu'il faut négliger car ils ne sont plus en bout de voie.

Des repères semblables existent pour limiter le déplacement horizontal du rail tenu par le chariot 12. Le levier 72 a cependant été prévu pour empêcher que le véhicule 8 ne tombe si les indications du capteur 73 étaient erronées. Le levier 72 consiste, comme on le voit bien aux figures 18 à 20, en une tige située en dessous du châssis du véhicule 8 pivotant autour d'un axe horizontal transversal 75 et pourvu d'un ergot 76 à mi-longueur sur sa face inférieure et d'une roulette 77 à son extrémité avant.

La roulette 77 est disposée sur une extrémité courbée transversalement 78 du levier 72 de sorte qu'elle roule sur une piste plane 79 du support 80 des glissières 9 et de la crémaillère 17. Le support 80 est un profilé uniforme dont la section est adaptée aux fonctions spécifiées et qui est rigidement lié à la paroi 32 par des vis. Il possède un creux 81 entre les portions de soutien des glissières 9. Quand la roulette 77 atteint le vide après avoir franchi le bout de voie, le levier 72 s'affaisse vers le bas mais la progression du véhicule 8 est interrompue quand l'ergot 76 rencontre un muret 82 qui barre partiellement le creux 81 à l'extrémité de chaque élément 5, 6 ou 7. Il est alors nécessaire de faire reculer le véhicule 8. La piste 79 est terminée par une zone en forte pente 83 qui permet de relever le levier 72 en laissant la roulette 77 remonter en roulant. Chaque élément 5, 6 ou 7 a une piste 79 qui commence d'ailleurs par une pente semblable mais en sens inverse, de sorte que la roulette 77 ne s'abaisse que brièvement et pour remonter aussitôt dès qu'elle aborde l'élément 5, 6 ou 7 suivant. Cette disposition doit être également assurée aux jonctions entre les parties fixes et mobiles des éléments coudés 6 et d'inclinaison 7 pour se prémunir contre tout mauvais placement initial. Un levier 72' semblable au levier 72 mais situé plus à l'arrière et symétriquement permet d'éliminer le même risque pendant les retours du véhicule 8 si on a oublié d'actionner correctement les parties mobiles des éléments 6 et 7. Si l'inclinaison du véhicule 8 peut devenir telle que la chute des leviers 72 ou 72' n'est plus assurée, on peut les contraindre par un ressort faiblement comprimé qui les repousse dessous le véhicule 8.

Un dispositif semblable est prévu sur le chariot 12 pour empêcher l'élément tenu d'être avancé excessivement sur celui-ci.

Un levier 72'', représenté aux figures 5 et 17, est libre de pivoter entre les paires de galets 18 pour retenir l'élément tenu si celui-ci est trop avancé. Les éléments de voie ont des formes telles qu'ils butent contre le véhicule 8 s'ils sont par inadvertance poussés vers l'arrière, à moins que le chariot 12 ne soit abaissé. Un capteur optique ou inductif 95 est cependant prévu sur le chariot 12 pour arrêter l'avance de l'élément tenu en temps normal : le levier 72" n'a qu'un rôle de sécurité. Un autre capteur peut être ajouté pour arrêter les mouvements verticaux du chariot 12.

Les différents moteurs du véhicule 8 sont commandés par un système électronique qui est situé hors de l'enceinte 1 et alimentés par une source d'énergie électrique ordinaire. Les connexions sont constituées par un cordon de fils électriques tiré par le véhicule, ce qui ne soulève pas de difficultés particulières à moins que la voie ne soit très longue ou de forme trop compliquée. Le cordon est référencé par 97 sur la figure 1, et le système électronique par 98. On peut aussi envisager de commander les moteurs par des ondes radiophoniques et de les alimenter par une batterie placée sur le véhicule 8, ou encore de prévoir des pistes conductrices de l'électricité sur les éléments de la voie, que des balais collecteurs situés sur le véhicule 8 frotteraient. De telles pistes pourraient être placées près des glissières 9. Pour les éléments 6 et 7 à parties mobiles, il faudrait établir une connexion permanente de dérivation entre les deux éléments qu'ils joindraient et qui alimenterait sans cesse le fragment de piste situé sur la partie mobile, quelle que soit sa position, à moins de recourir alors à une batterie rechargeable sur le véhicule 8.

La voie peut avoir une portée de porte-à-faux de six mètres environ et porter une charge de cinquante kilogrammes dans la réalisation actuelle. Quoique cette solution soit jugée inutile pour de nombreuses applications, il est prévu que la portée pourrait être multipliée grâce à l'emploi d'éléments coudés 106 de bifurcation (figure 21) généralement semblables aux éléments coudés 6 déjà décrits mais qui comprendraient en outre un bout de changement de direction 107 (par exemple à angle droit) et un bout de voie principale 108 (par exemple dans le prolongement de la partie déjà installée de la voie). Une voie en impasse 109 utilisée comme dispositif de soutènement serait alors posée à partir du bout de changement de direction 107 jusqu'à surplomber une console 110 qui servirait ensuite de point d'appui, ou jusqu'entre les mâchoires d'un étau qui assureraient ensuite un encastrement de reprise d'efforts en se refermant. Le support 4 serait alors soulagé.

Quand la zone d'intervention est atteinte, le véhicule 8 de pose est retiré et remplacé par un autre, qui porte l'outil souhaité mais présente des ressemblances avec le précédent car il est pourvu des moyens nécessaires pour s'accrocher aux glissières 9 et se déplacer le long de la voie en mouvant les parties mobiles de celle-ci. Ce sont principalement le chariot 12 et les mécanismes connexes qui sont omis. Une tâche courante dans ce domaine d'activité est le changement d'un tronçon de tuyau : les outils servent alors à démonter ou à découper, puis à monter ou à souder le tronçon neuf.

Le démontage de la voie ne pose pas de difficultés de mise en oeuvre ni de compréhension car il est effectué par des opérations inverses de celles qui sont décrites.

## Revendications

1. Véhicule de pose d'une voie composée d'éléments (5, 6, 7) aboutés, équipés de glissières (9) et d'une crémaillère (17) longitudinales, comprenant un châssis (99) mobile sur la voie, pourvu de galets de roulement (14) et de maintien du châssis sur les glissières (9), d'un pignon de déplacement (16) du châssis sur la voie en association à la crémaillère (17), et un chariot (12) mobile perpendiculairement à la voie dans le châssis (99) et pourvu de moyens (18) pour tenir un élément de voie et le poser devant des éléments déjà aboutés de la voie, ces moyens comprenant des galets (18) de roulement et de maintien des glissières (9) de l'élément tenu, et un pignon d'avancement (26) de l'élément tenu sur le chariot (12) en association à la crémaillère (17) de l'élément tenu.

2. Véhicule suivant la revendication 1, caractérisé en ce qu'il comprend un capteur de détection de bout de voie (73).

3. Véhicule suivant la revendication 1 ou 2, caractérisé en ce qu'il comprend un capteur de position (85) de l'élément tenu par le chariot (12).

4. Véhicule suivant l'une quelconque des revendications 1 à 3, caractérisé en ce qu'il comprend un moyen d'arrêt (72, 72') en bout de voie.

5. Véhicule suivant la revendication 4, caractérisé en ce que le moyen d'arrêt est un levier articulé au châssis (99), dont l'extrémité libre (77) est mobile sur la voie et muni d'un ergot (76) venant buter contre une saillie (82) en bout de voie quand l'extrémité libre dépasse de la voie.

6. Véhicule suivant l'une quelconque des revendications 1 à 5, caractérisé en ce qu'il comprend des moyens (100) pour modifier l'état de parties mobiles (10, 32c) de la voie.

7. Véhicule suivant l'une quelconque des revendications 1 à 6, caractérisé en ce qu'il comprend des moyens (100') pour verrouiller entre eux les éléments de la voie.

8. Véhicule suivant l'une quelconque des revendications 6 ou 7, caractérisé en ce que les moyens pour modifier entre eux les éléments de la voie comprennent une clé (70) tournant autour d'un axe perpendiculaire à la voie et muni d'une extrémité à entaille plate (71) ou à saillie plate.

9. Voie susceptible d'être installée par un véhicule conforme à l'une quelconque des revendications 1 à 8, caractérisée en ce que les éléments de voie comportent un corps (32) porteur des glissières (9) et de la crémaillère (17), qui est parallèle aux glissières, les glissières et les crémaillères venant en prolongement sur les éléments aboutés, le pignon (16) de déplacement du véhicule s'engageant sur les crémaillères.

10. Voie selon la revendication 9, caractérisée en ce que les éléments sont terminés par des faces formant des raccords (13) à emboîtement coulissant et à butée verticale.

11. Voie selon la revendication 10, caractérisée en ce que les raccords sont des queues d'aronde effilées.

12. Voie selon l'une quelconque des revendications 10 ou 11, caractérisée en ce que les éléments comprennent un dispositif de verrouillage dont font partie un évidement (27) à une face de raccord et une pièce mobile (30, 31) sous l'action d'un mécanisme de commande à l'autre face du raccord.

13. Voie selon l'une quelconque des revendications 9 à 12, caractérisée en ce que les éléments (5, 6, 7) portent un repère d'arrêt (74b).

14. Voie selon la revendication 13, caractérisée en ce que les éléments portent un repère de ralentissement (74a) aligné axialement avec le repère d'arrêt.

15. Voie selon l'une quelconque des revendications 9 à 14, caractérisée en ce que les éléments de voie comportent un sillon central (81) terminé par un muret de butée (82).

16. Voie selon l'une quelconque des revendications 9 à 15, caractérisée en ce qu'elle comprend des éléments de changement de direction (6, 7).

17. Voie selon la revendication 16, caractérisée en ce que des éléments de changement de direction sont des éléments ramifiés (106).

18. Voie selon la revendication 16, caractérisée en ce que des éléments de changement de direction sont des éléments coudés (6).

19. Voie selon la revendication 16, caractérisée en ce que des éléments de changement de direction sont des éléments d'inclinaison (7) du véhicule (8).

20. Voie selon la revendication 19, caractérisée en ce que les éléments d'inclinaison du véhicule sont conçus pour imposer au véhicule des rotations autour de l'axe desdits éléments.

21. Voie selon l'une quelconque des revendications 16 à 20, caractérisée en ce que les éléments de changement de direction comprennent des parties tournantes (10, 32c) sous l'action de mécanismes de commande (50 à 59).

22. Voie selon l'une quelconque des revendications 12 ou 21, caractérisée en ce que les mécanismes de commande comprennent un engrenage (58, 59) irréversible à vis sans fin (58).

23. Voie selon la revendication 22, caractérisée en ce que les dispositifs de verrouillage ou les parties tournantes comprennent des butées mécaniques (85).

24. Voie selon l'une quelconque des revendications 21 à 23, caractérisée en ce que les mécanismes de commande comprennent un axe terminé par une clé (64) à saillie plate ou à entaille plate pouvant prendre une orientation longitudinale sur la voie.

25. Voie selon les revendications 23 et 24, caractérisée en ce que les axes sont montés dans les mécanismes de commande avec des pièces (94) offrant un jeu angulaire et du frottement qui maintient les axes en place à une position angulaire où les saillies ou les entailles prennent la direction longitudinale, les butées mécaniques (85) étant en service.

## Claims

1. Track laying vehicle constituted by elements (5, 6, 7) joined end to end and equipped with slideways (9) and a rack (17) in longitudinal form, incorporating a chassis (99) travelling on the track and provided with rollers (14) for rolling and maintaining the chassis on the slideways (9), a pinion (16) for the displacement of the chassis on the track in association with the rack (17) and a carriage (12) moving perpendicular to the track in the chassis (99) and provided with means (18) for holding a track element and placing it in front of already joined elements of the track, said means comprising rollers (18) for rolling and maintaining the slideways (9) of the held element, and a pinion (26) for the advance of the held element on the carriage (12) in association with the rack (17) of the held element.

2. Vehicle according to claim 1, characterized in that it comprises an end of track detection sensor (73).

3. Vehicle according to claim 1 or 2, characterized in that it comprises a position sensor (85) for the element held by the carriage (12).

4. Vehicle according to any one of the claims 1 to 3, characterized in that it comprises an end of track stop means (72, 72').

5. Vehicle according to claim 4, characterized in that the stop means is a lever articulated to the chassis (99), whose free end (77) is mobile on the track and provided with a lug (76) abutting against an end of track projection (82) when the free end projects beyond the track.

6. Vehicle according to any one of the claims 1 to 5, characterized in that it comprises means (100) for modifying the state of the mobile parts (10, 32c) of the track.

7. Vehicle according to any one of the claims 1 to 6, characterized in that it comprises means (100') for locking together the track elements.

8. Vehicle according to claim 6 or 7, characterized in that the means for modifying the state of the mobile parts of the track comprise a key member (70) rotating about an axis perpendicular to the track and provided with a flat notch end (71) or flat projection end.

9. Track installable by a vehicle according to any one of the claims 1 to 8, characterized in that the track elements incorporate a body (32) carrying slides (9) and the rack (17), which is parallel to the slides, the slides and the rack being in extension of one another on the joined elements, the vehicle displacement pinion (16) engaging on the racks.

10. Track according to claim 9, characterized in that the elements are terminated by faces forming vertical abutment, sliding fitting couplings (13).

11. Track according to claim 10, characterized in that the couplings are tapered dovetails.

12. Track according to either of the claims 10 and 11, characterized in that the elements comprise a locking device incorporating a recess on one coupling face and a part (31) mobile under the action of a control mechanism on the other coupling face.

13. Track according to any one of the claims 9 to 12, characterized in that the elements (5, 6, 7) carry a stop mark (74b).

14. Track according to claim 13, characterized in that the elements carry a slowing down mark (74a) axially aligned with the stop mark.

15. Track according to any one of the claims 9 to 14, characterized in that the track elements have a central groove (81) terminated by an abutment wall (82).

16. Track according to any one of the claims 9 to 15, characterized in that it comprises direction changing elements (6, 7).

17. Track according to claim 16, characterized in that the direction changing elements are branched elements (106).

18. Track according to claim 16, characterized in that the direction changing elements are bent elements (6).

19. Track according to claim 16, characterized in that the direction changing elements are inclination elements (7) of the vehicle (8).

20. Track according to claim 19, characterized in that the vehicle inclination elements are designed so as to impose on the vehicle rotations about the axis of said elements.

21. Track according to any one of the claims 16 to 20, characterized in that the direction changing elements comprise parts (10, 32c) rotating under the action of control mechanisms (50 to 59).

22. Track according to either of the claims 12 and 21, characterized in that the control mechanisms comprise irreversible gear (58, 59) with an endless screw (58).

23. Track according to claim 22, characterized in that the locking devices or rotary parts comprise mechanical abutments (85).

24. Track according to any one of the claims 21 to 23, characterized in that the control mechanisms comprise a spindle terminated by a flat projection or flat notch key member (64) able to assume a longitudinal orientation on the track.

25. Track according to claims 23 and 24, characterized in that the spindles are mounted in control mechanisms with parts (94) offering an angular clearance and friction, which maintain them in place in an angular position where the projections or notches take the longitudinal direction, the mechanical abutments (85) being in service.

## Patentansprüche

1. Fahrzeug zum Legen einer durch aneinanderstoßende Elemente (5, 6, 7) gebildeten Schiene, ausgestattet mit Führungen (9) und einer Zahnstange (17) in Längsrichtung, umfassend ein auf der Schiene bewegliches Gestell (99), versehen mit dem Gestell auf den Führungen (9) Halt gebenden Laufrollen (14), einem Zahnrad (16) zur Fortbewegung des Gestells auf der Schiene in Verbindung mit der Zahnstange (17), und einem im rechten Winkel zu der Schiene in dem Gestell (99) beweglichen Wagen (12), und versehen mit Einrichtungen (18), um ein Schienenelement zu halten und abzulegen vor schon aneinanderstoßenden Elementen der Schiene, wobei diese Einrichtungen Laufrollen (18) zur Aufnahme der Führungen (9) des gehaltenen Elements umfassen und ein Zahnrad (26) zum Vorwärtsbewegen des in dem Wagen (12) gehaltenen Elements, in Verbindung mit der Zahnstange (17) des gehaltenen Elements.

2. Fahrzeug nach Anspruch 1, dadurch gekennzeichnet, daß es einen Sensor (73) zum Feststellen des Schienenendes umfaßt.

3. Fahrzeug nach Anspruch 1 oder 2, dadurch gekennzeichnet, daß es einen Lagesensor (85) des durch den Wagen (12) gehaltenen Elements umfaßt.

4. Fahrzeug nach einem der Ansprüche 1 bis 3, dadurch gekennzeichnet, daß es eine Schienenende-Stoppeinrichtung (72, 72') umfaßt.

5. Fahrzeug nach Anspruch 4, dadurch gekennzeichnet, daß die Stopp-Einrichtung ein am Gestell (99) angelenkter Hebel ist, dessen freies Ende (77) auf der Schiene beweglich ist und mit einem Nocken (ergot) (76) ausgestattet ist, der auf einen Vorsprung (82) am Schienenende stößt, wenn das freie Ende über die Schiene hinausfährt.

6. Fahrzeug nach einem der Ansprüche 1 bis 5, dadurch gekennzeichnet, daß es Einrichtungen (100) zum Verändern der Lage von beweglichen Teilen (10, 32c) der Schiene umfaßt.

7. Fahrzeug nach einem der Ansprüche 1 bis 6, dadurch gekennzeichnet, daß es Einrichtungen (100') umfaßt, um die Elemente der Schiene miteinander zu verriegeln.

8. Fahrzeug nach einem der Ansprüche 6 oder 7, dadurch gekennzeichnet, daß die Einrichtungen zum Verändern bzw. Verriegeln der Schienenelemente untereinander einen Schlüssel (70) umfassen, drehbar um eine zur Schiene senkrechte Achse und versehen mit einem Ende mit einem flachen Einschnitt (71) oder einem flachen Vorsprung.

9. Schiene die installiert werden kann mittels eines Fahrzeugs nach einem der Ansprüche 1 bis 8, dadurch gekennzeichnet, daß die Schienenelemente einen Körper (32) umfassen, Träger der Führungen (9) und der zu den Führungen parallelen Zahnstange (17), wobei die Führungen und die Zahnstangen an den aneinanderstoßenden Elementen sich gegenseitig verlängern und das Antriebsritzel (16) des Fahrzeugs in die Zahnstangen eingreift.

10. Schiene nach Anspruch 9, dadurch gekennzeichnet, daß die Elemente durch Flächen bzw. Seiten enden, die gleitende Steckverbindungen (13) mit Vertikalanschlag bilden.

11. Schiene nach Anspruch 10, dadurch gekennzeichnet, daß die Verbindungen konisch zulaufende Schwalbenschwanzverbindungen sind.

12. Schiene nach einem der Ansprüche 10 oder 11, dadurch gekennzeichnet, daß die Elemente eine Verriegelungsvorrichtung umfassen, gebildet durch eine Vertiefung (27) auf der einen Verbindungsseite und ein unter der Einwirkung eines Betägigungsmechanismus bewegliches Teil (30, 31) auf der anderen Verbindungsseite.

13. Schiene nach einem der Ansprüche 9 bis 12, dadurch gekennzeichnet, daß die Elemente (5, 6, 7) eine Stoppmarkierung (74b) tragen.

14. Schiene nach Anspruch 13, dadurch gekennzeichnet, daß die Elemente eine Verzögerungsmarkierung (74a) tragen, axial mit der Stoppmarkierung ausgerichtet.

15. Schiene nach einem der Ansprüche 9 bis 14, dadurch gekennzeichnet, daß die Schienenelemente eine zentrale Rille (81) aufweisen, endend durch eine Anschlagswand (82).

16. Schiene nach einem der Ansprüche 9 bis 15, dadurch gekennzeichnet, daß sie Richtungswechselelemente (6, 7) umfaßt.

17. Schiene nach Anspruch 16, dadurch gekennzeichnet, daß die Richtungswechselelemente Verzweigungselemente (106) sind.

18. Schiene nach Anspruch 16, dadurch gekennzeichnet, daß die Richtungswechselelemente Krümmungselemente (6) sind.

19. Schiene nach Anspruch 16, dadurch gekennzeichnet, daß die Richtungswechselelemente Neigungselemente (7) des Fahrzeugs (8) sind.

20. Schiene nach Anspruch 19, dadurch gekennzeichnet, daß die Neigungselemente des Fahrzeugs derart gestaltet sind, daß sie das Fahrzeug zu Drehungen um die Achse besagter Elemente zwingen.

21. Schiene nach einem der Ansprüche 16 bis 20, dadurch gekennzeichnet, daß die Richtungswechselelemente Teile (10, 32c) umfassen, die drehbar sind unter der Wirkung von Betätigungsmechanismen (50 bis 59).

22. Schiene nach einem der Ansprüche 12 oder 21, dadurch gekennzeichnet, daß die Betätigungsmechanismen ein irreversibles Schneckengetriebe (58, 59) umfassen.

23. Schiene nach Anspruch 22, dadurch gekennzeichnet, daß die Verriegelungsvorrichtungen oder die drehbaren Teile mechanische Anschläge (85) umfassen.

24. Schiene nach einem der Ansprüche 21 bis 23, dadurch gekennzeichnet, daß die Betätigungseinrichtungen eine Achse umfassen, die durch einen Schlüssel (64) mit einem flachen Vorsprung oder einem flachen Einschnitt endet, der eine Ausrichtung auf die Längsrichtung der Schiene einnehmen kann.

25. Schiene nach einem der Ansprüche 23 und 24, dadurch gekennzeichnet, daß die Achsen mit Teilen (94) in die Betätigungsmechanismen montiert sind, die ein Winkelspiel haben und Reibung, was die Achsen in einer Winkelstellung hält, in der die Vorsprünge oder die Einschnitte die Längsrichtung einnehmen, wobei die mechanischen Anschläge (85) im Einsatz sind.
